# EUROPEAN PATENT SPECIFICATION

(11) **EP 2 994 788 B1**
(45) Date of publication and mention of the grant of the patent: **01.11.2017**
(21) Application number: 13737867.5
(22) Date of filing: 08.05.2013
(51) Int. Cl.: G02B 6/44

(54) **OPTICAL JOINT CLOSURE**
GEHÄUSE FÜR OPTISCHE VERBINDUNG
GAINE DE JOINT OPTIQUE

(43) Date of publication of application: 16.03.2016
(73) Proprietor: Prysmian S.p.A., 20126 Milano (IT)
(72) Inventor: KERRY, Matt, 20126 Milano (IT)
(74) Representative: Porta, Checcacci & Associati S.p.A
(86) International application number: PCT/IT2013/000136
(87) International publication number: WO 2014/181364

(56) References cited:
- WO-A2-99/67670
- WO-A2-2008/112118
- US-B1- 7 190 874

## Description

### BACKGROUND OF THE INVENTION

The present invention relates to an optical joint closure.

In the present description and claims, under the term "optical joint closure", a connector for straight connections, a connector for a branch connections and a termination lug are encompassed.

More in particular, the invention relates to an optical joint closure for use in a manhole or footway box.

Optical joint closures are housing devices which include a plurality of splice trays able to house the splices connecting the optical fibers of one or more network cables to respective ones of the optical fibers of another network cable or of a fiber optic cable for final users. Optical joint closures are used to protect the splice trays from dirt, humidity etc. and also from stresses.

Optical joint closures are often installed in manholes or footway boxes or underground jointing chambers in a suspended, horizontal state.

The optical joint closure includes a cylindrical hollow bottomed casing defining an inner cavity, and a closure cap.

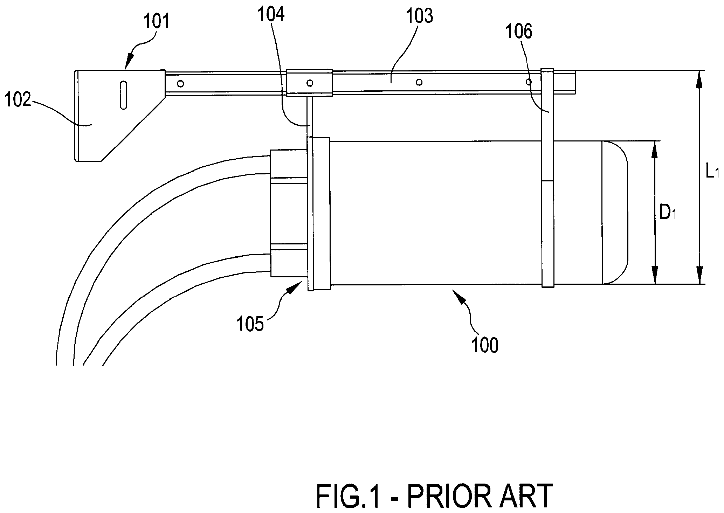

FIG. 1 shows an optical joint closure according to the prior art, sold as Part N. XAPSC00525, Hinged Mounting Bracket, by Prysmian Telecom Cables & Systems UK Ltd, Hants, UK.

An L-shaped mounting bracket 101 is provided at a wall of the manhole or footway box, with the short arm 102 of the bracket fixed, e.g. bolted to the wall and the long arm 103 of the bracket cantilever from the wall. The optical joint closure 100 is hung to the long arm 102 of the bracket 101 by an annular member 104 that abuts the closure cap 105 and fixes thereto, and a loop tether 106, such as a chain or a strap, near the opposed, closed end of the optical joint closure 100.

The long arm 103 of the bracket 101 can be hinged at the vertex of the L so as to be able to be turned upwards, parallel to the wall, with the optical joint closure vertical to provide easy access for working on the joint; on completion the optical joint closure 100 is lowered and the long arm 103 of the bracket 101 returned to the horizontal position.

US 6,292,614 B1 discloses a closure that is operative for containing optical fiber splices and includes a support assembly that supports the splices. While the closure is in an enclosed configuration, the support assembly and a holding bracket are substantially contained in a housing of the closure. When the splices within the closure are to be serviced, the support assembly and the holding bracket are removed from the housing. Thereafter, the holding bracket is configured so that a protruding portion of the holding bracket extends away from the support assembly to provide an extended configuration. While in the extended configuration, the protruding portion of the holding bracket is clamped to a work surface with a clamping device so the holding bracket supports the support assembly in a cantilever-like fashion and the holding bracket and the clamping device do not substantially interfere with the servicing of the optical fiber splices. After servicing the splices, the holding bracket is configured in an unextended configuration and the support assembly, with the holding bracket attached thereto, is returned to the housing, so the holding bracket is readily available for use the next time the closure is serviced.

WO 99/67670 A2 discloses an optical joint closure having a rack of hinged splice trays.

The Applicant observes that the above documents are totally silent on any means for mounting the assembled, closed enclosure to e.g. a wall during the service life of the joint.

WO 2008/112118A2 discloses an optical joint closure according to the preamble of claim 1.

### SUMMARY OF THE INVENTION

The Applicant has perceived that by reducing the overall space of an optical joint closure, the installation operations result simpler for the installers and, moreover, it is possible to save space e.g. in a manhole.

In particular, it has been observed that the known closure cap had sufficient space within its contour to house the holding bracket, without the need of arranging the bracket itself externally. Accordingly, it has been found that by arranging the bracket holding the optical joint closure within the contour of the closure cap, a significant amount of the overall space can be saved.

In one aspect, the present invention relates to an optical joint closure comprising a casing defining a cavity and a closure cap, and a plurality of splice trays housed within the cavity. The optical joint closure comprises a bracket extending through the closure cap, and has a first protruding portion that protrudes from the closure cap at a side opposite a side facing the casing.

Usually, the closure cap is essentially disc shaped and provided with holes for the passage of optical fiber cables to be jointed.

Advantageously the bracket is contained within the contour of the closure cap, and also has a second protruding portion that protrudes from the closure cap at the side facing the casing and within the casing.

Preferably the bracket is fixed to a seat of the closure cap, removable if needed.

Preferably the casing has an elongate seat for housing the second protruding portion of the bracket.

Usually, a rack of splice trays is connected to the closure cap and housed within the casing.

Preferably, the splice trays are hingedly connected to the rack.

Preferably the bracket extends in a position laterally with respect to the hinges (7) of the splice trays.

Preferably the first protruding portion of the bracket is longer than the second protruding portion of the bracket.

Preferably the first protruding portion of the bracket has mounting holes for connection with a wall bracket.

Preferably the mounting holes of the first protruding portion of the bracket are for hinged connection with a wall bracket.

### BRIEF DESCRIPTION OF THE DRAWINGS

The features and advantages of the present invention will be made apparent by the following detailed description of some exemplary embodiments thereof, provided merely by way of non-limiting examples, description that will be conducted by making reference to the attached drawings, wherein:
- FIG. 1, already referred to, schematically shows an optical joint closure according to the prior art;
- FIG. 2 schematically shows an optical joint closure according to the invention, in a longitudinal section; and
- FIG. 3 schematically shows the optical joint of FIG. 2 in an open condition and with the casing removed.

Similar members are denoted by like numbers in the various figures.

### DETAILED DESCRIPTION

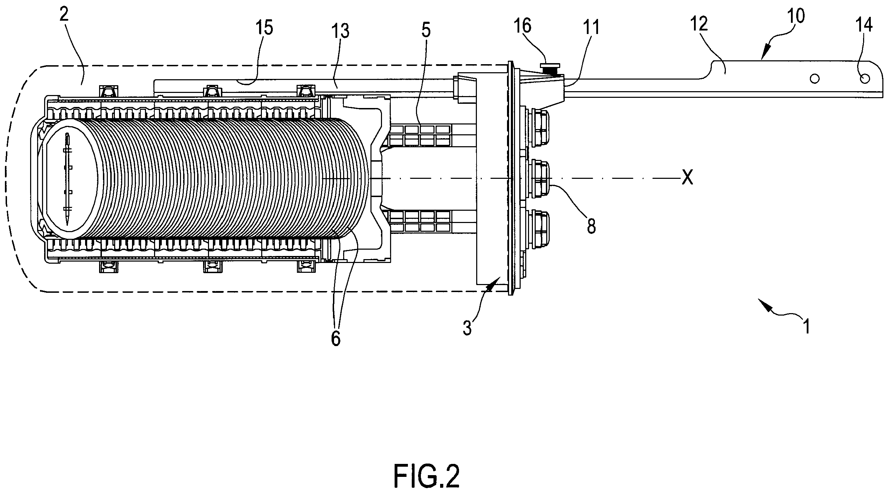

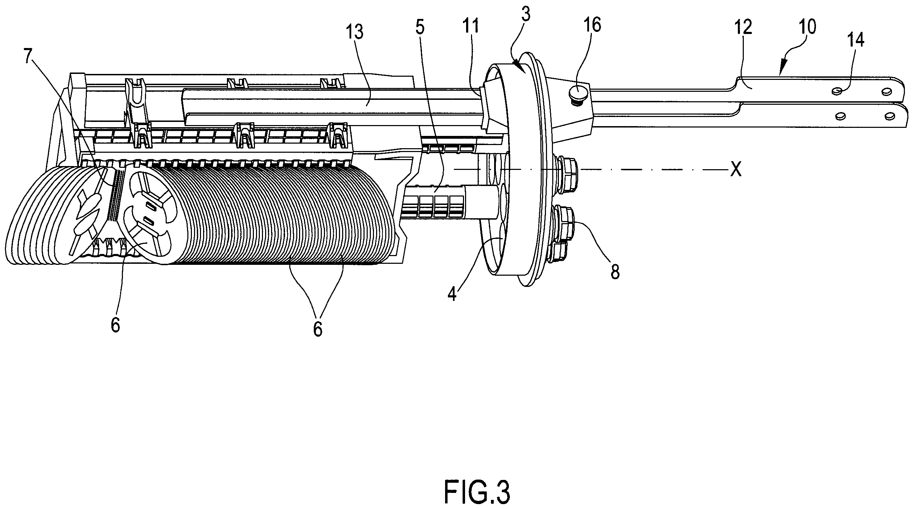

FIGs. 2 and 3 show an optical joint closure 1 according an embodiment of the invention, respectively in a longitudinally sectional view and in a perspective, partly broken away view.

The optical joint closure 1 comprises a casing 2 defining an inner cavity and a closure cap 3.

In one version, the casing 2 is a hollow cylinder with a closed end (or bottom), substantially semi-spherical.

The bottom of the casing 2 is solid so that the inner cavity is open at one end only. The closure cap 3 comprises holes 4 for accommodating the optical fiber cables to be jointed together.

The closure cap 3 carries, on a first side thereof, an inner rack or spine or frame 5 carrying splice trays 6, each tray 6 accommodating one or more optical cables and/or optical fiber units (not shown).

Typically, an optical cable may contain one or more fiber unit (not shown).

A fibre unit can be defined as an assembly comprising one (or more) optical fibre(s) which is constituted by a glass core, a glass cladding, a single or dual coating layer and an outer layer surrounding the said one (or more) optical fiber(s) in order to protect the overall optical fibre(s) from damage.

Trays 6 are usually hingedly connected to the rack 5 as at hinges 7 so as to individually open to work on the fibers. The trays 6 accommodate the optical fibers with a minimum bend radius above a suitable threshold.

The casing 2 with the closure cap 3 mounted thereto close in a watertight way the internally housed splices. Covers 8 may be used to close the holes 4 that are not used for passage of cables to be jointed.

According to the invention, a bracket 10 is integrally mounted with the closure cap 3, so as to behave as if they were one piece.

The bracket 10 extends through the closure cap 3.

Preferably, the bracket 10 extends through the closure cap 3 in the wall between two or more holes 4.

More in detail, the bracket 10 advantageously extends through a seat or opening 11 integral with the closure cap 3. The bracket 10 is fixed thereto through a screw or bolt 16 so as to be removable from the closure cap 3.

The bracket 10 preferably extends in an eccentric position with respect to the closure cap 3, within the outer contour thereof, preferably near the outer contour thereof.

Preferably, the bracket 10 extends in a position laterally with respect to the hinges 7 of the trays 6, so as not to hinder working on the trays 7 and the optical fibers to joint them when the trays 7 are turned.

The bracket 10 extends parallel to a longitudinal axis X of the optical joint closure 1.

The bracket 10 preferably extends longitudinally both from the first side of the closure cap 3, alongside the rack 5, and from a second side of the closure cap 3 opposite the first side. Thus the bracket 10 has a first protruding portion 12 and a second protruding portion 13.

Preferably at least part of the first protruding portion 12 is larger than the second protruding portion 13, and holes 14 are provided in the first protruding portion 12.

Moreover, preferably the first protruding portion 12 is longer than the second protruding portion 13.

According to an embodiment (not shown), the first protruding portion 12 can be shorter than the second protruding portion 13.

According to an further embodiment (not shown), the first protruding portion 12 has the same length of the second protruding portion 13.

An elongate seat 15 is formed in the hollow bottomed casing 2 to accommodate the second protruding portion 13 of the bracket 10. Preferably this elongated seat 15 is provided in the wall of casing 2.

When the casing 2 and the closure cap 3 are joined to tightly enclose the spliced optical fibers, the first protruding portion 12 of bracket 10 protrudes orthogonally from the closure cap 3. The bracket 10 is however contained within the circular extent of the closure cap and of the optical joint closure itself, with savings in terms of overall occupied space.

Optical closure joint 1 may be easily mounted e.g. to a wall of a manhole or footway box by attaching the first protruding portion 12 of bracket 10 to a second bracket (not shown).

Preferably, the bracket 10 is hingedly connected to a second bracket through pins (not shown) extending into holes 14, so that it can be easily moved from a rest horizontal position to a servicing vertical position, wherein the closure cap 3 is at the bottom and the rack is above the closure cap 3 or vice versa.

More in detail, a triangular or L-shaped mounting bracket may be provided at a wall of a manhole or footway box, with a first arm of the bracket fixed, e.g. bolted to the wall and a second arm of the bracket cantilever from the wall.

The bracket 10 is hung to the second arm of the wall bracket, preferably hinged so as to be able to be turned upwards, parallel to the wall, with the optical joint straight to provide easy access for working on the joint; on completion the joint is lowered and the bracket returned to the horizontal position.

The bracket 10 may also be so shaped as to be directly fixed to the wall.

The optical joint closure 1 advantageously dispenses with the use of a tether and saves space with respect to conventional, external mounting brackets as that of FIG. 1.

Up to and even more than 20% space may be saved for typical sizes of the trays. E.g. the bracket 10 may be contained within an optical joint closure having a diameter of about 250 mm, while prior art mounting with an external bracket of an optical joint closure having a diameter D1 of about 250 mm brings an occupied space of about L1=330 mm (see FIG. 1).

Besides space benefits, the optical joint closure of the invention also provides cost benefits because a tether and annular member are not required and installation is quicker.

Alternatively to a bottomed cylindrical closure, the closure may comprise two closure caps at the two longitudinal ends to accommodate for an in-line joint, or can also be shaped to accommodate a branch connection.

## Claims

1. An optical joint closure (1) comprising a casing (2) defining a cavity and a closure cap (3), and a plurality of splice trays (6) housed within the cavity, wherein the joint closure (1) comprises a bracket (10) extending through the closure cap (3), wherein the bracket (10) has a first protruding portion (12) that protrudes from the closure cap (3) at a side opposite a side facing the casing (2), **characterized in that** the bracket (10) is contained within the contour of the closure cap (3) and also has a second protruding portion (13) that protrudes from the closure cap (3) at the side facing the casing and within the casing (2).

2. Optical joint closure (1) as claimed in claim 1, wherein the bracket (10) is fixed to a seat (11) of the closure cap (3), removable if needed.

3. Optical joint closure (1) as claimed in claim 2, wherein the casing (2) has an elongate seat for housing the second protruding portion (13) of the bracket (10).

4. Optical joint closure (1) as claimed in any of claims from 1 to 3, wherein a rack (5) of splice trays (6) is connected to the closure cap (3) and housed within the casing (2).

5. Optical joint closure (1) as claimed in claim 4, wherein the splice trays (6) are hingedly connected to the rack (5).

6. Optical joint closure (1) as claimed in claim 5, wherein the bracket (10) extends in a position laterally with respect to the hinges (7) of the splice trays (6).

7. Optical joint closure (1) as claimed in any of claims from 1 to 6, wherein the first protruding portion (12) of the bracket (10) is longer than the second protruding portion (13) of the bracket (10).

8. Optical joint closure (1) as claimed in any of claims from 1 to 6, wherein the first protruding portion (12) of the bracket (10) has mounting holes (14) for connection with a wall bracket.

9. Optical joint closure (1) as claimed in claim 8, wherein the mounting holes (14) of the first protruding portion (12) of the bracket (10) are for hinged connection with a wall bracket.

## Patentansprüche

1. Optischer Verbinderbehälter (1), umfassend ein Gehäuse (2), das einen Hohlraum bildet, und eine Verschlusskappe (3) sowie eine Vielzahl in dem Hohlraum untergebrachter Spleißablagen (6), wobei der Verbinderbehälter (1) eine Halterung (10) aufweist, die sich durch die Verschlusskappe (3) erstreckt, wobei die Halterung (10) einen ersten hervorragenden Abschnitt (12) hat, der von der Verschlusskappe (3) auf einer Seite hervorragt, die einer Seite gegenüberliegt, die dem Gehäuse (2) zugewandt ist, **dadurch gekennzeichnet, dass** die Halterung (10) innerhalb des Umrisses der Verschlusskappe (3) enthalten ist und zudem einen zweiten hervorragenden Abschnitt (13) hat, der von der Verschlusskappe (3) auf der Seite hervorragt, die dem Gehäuse zugewandt ist und sich in dem Gehäuse (2) befindet.

2. Optischer Verbinderbehälter (1) nach Anspruch 1, bei dem die Halterung (10) an einem Sitz (11) der Verschlusskappe (3) befestigt ist, der bei Bedarf abnehmbar ist.

3. Optischer Verbinderbehälter (1) nach Anspruch 2, bei dem das Gehäuse (2) einen langgestreckten Sitz für die Aufnahme des zweiten hervorragenden Abschnitts (13) der Halterung (10) aufweist.

4. Optischer Verbinderbehälter (1) nach einem der Ansprüche 1 bis 3, bei dem ein Träger (5) der Spleißablagen (6) mit der Verschlusskappe (3) verbunden und innerhalb des Gehäuses (2) untergebracht ist.

5. Optischer Verbinderbehälter (1) nach Anspruch 4, bei dem die Spleißablagen (6) gelenkig mit dem Träger (5) verbunden sind.

6. Optischer Verbinderbehälter (1) nach Anspruch 5, bei dem sich die Halterung (10) seitlich in Bezug auf die Scharniere (7) der Spleißablagen (6) erstreckt.

7. Optischer Verbinderbehälter (1) nach einem der Ansprüche 1 bis 6, bei dem der erste hervorragende Abschnitt (12) der Halterung (10) länger ist als der zweite hervorragende Abschnitt (13) der Halterung (10).

8. Optischer Verbinderbehälter (1) nach einem der Ansprüche 1 bis 6, bei dem der erste hervorragende Abschnitt (12) der Halterung (10) Befestigungslöcher (14) zur Verbindung mit einer Wandhalterung aufweist.

9. Optischer Verbinderbehälter (1) nach Anspruch 8, bei dem die Befestigungslöcher (14) des ersten hervorragende Abschnitt (12) der Halterung (10) zur gelenkigen Verbindung mit einer Wandhalterung dienen.

## Revendications

1. Gaine de joint optique (1) comprenant un boîtier (2) définissant une cavité et un capuchon de gaine (3), et une pluralité de plaques d'épissure (6) logées dans la cavité, dans laquelle la gaine de joint (1) comprend un support (10) s'étendant à travers le capuchon de gaine (3), dans laquelle le support (10) comporte une première partie en saillie (12) qui fait saillie depuis le capuchon de gaine (3) au niveau d'un côté opposé à un côté faisant face au boîtier (2), **caractérisée en ce que** le support (10) est contenu dans le contour du capuchon de gaine (3) et comporte également une seconde partie en saillie (13) qui fait saillie depuis le capuchon de gaine (3) au niveau du côté faisant face au boîtier et dans le boîtier (2).

2. Gaine de joint optique (1) selon la revendication 1, dans laquelle le support (10) est fixé à un siège (11) du capuchon de gaine (3), de manière amovible si nécessaire.

3. Gaine de joint optique (1) selon la revendication 2, dans laquelle le boîtier (2) comporte un siège allongé pour loger la seconde partie en sailllie (13) du support (10).

4. Gaine de joint optique (1) selon l'une quelconque des revendications 1 à 3, dans laquelle une grille (5) de plaques d'épissure (6) est connectée au capuchon de gaine (3) et logée dans le boîtier (2).

5. Gaine de joint optique (1) selon la revendication 4, dans laquelle les plaques d'épissure (6) sont connectées de manière articulée à la grille (5).

6. Gaine de joint optique (1) selon la revendication 5, dans laquelle le support (10) s'étend dans une position latéralement par rapport aux articulations (7) des plaques d'épissure (6).

7. Gaine de joint optique (1) selon l'une quelconque des revendications 1 à 6, dans laquelle la première partie en saillie (12) du support (10) est plus longue que la seconde partie en saillie (13) du support (10).

8. Gaine de joint optique (1) selon l'une quelconque des revendications 1 à 6, dans laquelle la première partie en saillie (12) du support (10) comporte des trous de montage (14) pour la connexion à un support mural.

9. Gaine de joint optique (1) selon la revendication 8, dans laquelle les trous de montage (14) de la première partie en saillie (12) du support (10) servent à la connexion articulée à un support mural.
